# EUROPEAN PATENT SPECIFICATION

(11) **EP 2 109 386 B1**
(45) Date of publication and mention of the grant of the patent: **12.05.2010**
(21) Application number: 07859115.3
(22) Date of filing: 18.12.2007
(51) Int. Cl.: A47J 31/30

(54) **COFFEE-MAKER STRUCTURE FOR PREPARATION OF HOT BEVERAGES**
KAFFEEMASCHINENSTRUKTUR ZUR ZUBEREITUNG VON HEISSGETRÄNKEN
STRUCTURE DE CAFETIÈRE POUR LA PRÉPARATION DE BOISSONS CHAUDES

(30) Priority: 19.01.2007 IT VI20070016
(43) Date of publication of application: 21.10.2009
(73) Proprietor: FOREVER S.R.L., 28923 Fondotoce (Verbania) (IT)
(72) Inventor: LANTIERI, Emanuele, I-28923 Zoverallo Verbania (IT)
(74) Representative: Pajola, Stefano
(86) International application number: PCT/IB2007/003999
(87) International publication number: WO 2008/087481

(56) References cited:
- WO-A-98/17160
- FR-A- 1 061 936
- FR-A- 1 157 094
- GB-A- 2 103 469
- GB-A- 191 310 264

## Description

### Field of the invention

The present invention finds application in the art of devices for preparing hot brewing beverages, particularly for home preparation of coffee or two-component hot beverages such as cappuccino, milk and coffee, latte macchiato (i.e. milk marked or "stained" with coffee) or the like.

### Background of the invention

Home coffee-making devices, traditionally known as "moka" pots, are essentially comprised of a lower boiler in which brew water is poured, and which is connected via a conduit to an upper cup-shaped reservoir for receiving the hot brewing beverage being prepared and a brewing chamber, generally formed of a perforated basket interposed between the boiler and the upper cup, in which the solid material to be brewed, typically ground coffee is introduced.

In operation, once water has been poured in the lower boiler and the basket has been filled with ground coffee, the upper cup-shaped container is tightly screwed onto the lower boiler and the device is placed on a heat source.

As water is heated, thereby causing steam production, and the air above it is also heated, pressure increases on water, which is thus forced up the conduit and through the ground coffee to reach the upper container, by possibly flowing through a column which extends substantially to the upper edge of the cup-shaped container.

As used herein, the devices for preparing hot beverages, even two-component beverages of the present invention will be designated for simplicity as coffee-makers.

Coffee-makers of the above mentioned type are not suitable for preparing certain "two-component" beverages from two different liquids such as milk and coffee, latte macchiato or cappuccino.

Particularly for the latter, milk is required to be foamed, generally by blowing steam therein.

Such beverages, particularly cappuccino, are made using coffee-makers of the "moka" pot type, in which milk is foamed by the flow of coffee being brewed and discharged at high speed through a nozzle into the milk previously received in the upper cup-shaped container.

US 4,098,186 discloses a coffe making machine in which the coffee is conveyed into the upper cup through a perforated ring on the bottom of the cup to cause a certain turbulence for mixing coffee with the other components of the beverage to be made.

US 4,557,187 discloses an apparatus for preparing cappuccino comprising a "moka" pot-type coffee-maker having an additional boiler associated to the former which is designed to form the steam required for milk foaming.

International application WO85/03852 discloses a moka pot-type coffee-maker in which the colum through which the brew flows into the upper cup has an additional outer concentric tubular conduit for conveying coffee to the base of the cup in which milk has been previously collected.

European Patent application EP-A-1093746 discloses a coffee-maker for home preparation of a "cappuccino"-type beverage by means of gurgling coffee through milk.

Documents GB-10264 and FR-1157094 disclose further coffee making machines. For liquid flow to have a sufficient speed as to cause milk foaming, the coffee-maker has a gravity valve within the brew path, downstream from the ground coffee basket, essentially composed of a calibrated nozzle with a closing member of predetermined weight.

When pressure within the boiler becomes substantially equal or equivalent to or slightly higher than the valve set point, the closing member pops up, thereby releasing the nozzle and allowing the brew to flow via a suitable conduit to a second nozzle at the bottom of the upper collection cup. Under these conditions, water passes through the layer of ground coffee at a pressure above the atmospheric pressure, as regulated by setting the pressure valve, and the brew flows out of the second nozzle directly into milk at a sufficient speed as to cause foaming thereof.

A peculiar aspect of this prior art arrangement is the provision of means for locking or securing the closing member in its opening position to allow coffee outflow at maximum speed thereby causing a certain turbulence.

International patent application W02006/008768 discloses a moka pot-type coffee-maker for preparing hot beverages, particularly cappuccino, which comprises a gravity valve within the brew path, having a piston that moves between a closed position due to gravity and an open position due to coffee flow. A peculiar feature of this solution is the provision of means for holding the plug in its open position.

The International Patent application W02006/04626 concerns a coffee-maker having a gravity valve within the brew path as described above, which causes small pressure losses along the liquid path to increase the speed of the liquid phase through the coffee layer. Furthermore, the ground coffee container has a movable bottom wall, which is pushed by a pin integral therewith between a rest position with the coffee-maker dismantled and an operating position with the cup screwed onto the boiler to increase the volume available for brewing and reducing liquid pressure losses as liquid passes through the layer of ground coffee.

One drawback of the above prior art solution is that the motion of the shut-off piston is affected by system friction, which is essentially caused by the wear and cleaning state of contact surfaces. Any friction increase caused by dirt or imperfect cleaning prevents or limits locking of the piston in the opening position and cause early closing of the valve, thereby preventing complete coffee outflow.

A further drawback is that the opening of the closing member is greatly influenced by any offset from a perfectly vertical position thereof and by any vibration or shock that might cause undesired opening.

Another drawback of the above solution is that, to prevent the beverage from being sucked back from the cup into the boiler as the inner pressure decreases when the heat source is turned off, the pressure valve exhausts into the atmosphere, forcibly in a capillary manner to prevent coffee outflow in ordinary conditions. Such exhaust passage may be easily obstructed with deposits of the beverage being prepared, particularly milk.

Another drawback is that the pressure valve, comprising the calibrated nozzle, the shut off member, the setting weight of the closing member, the sliding guide and the closing member holding means is of complex and expensive construction.

A further drawback is that, should the closing member become obstructed, a pressure of up to 4 bar, i.e. the pressure pressure setpoint of the boiler safety valve, would build up in the lower part of the coffee maker. In this case, if the coffee maker is opened while it is still hot, by separating, as usual, the parts under pressure, hot liquid and steam may be abruptly released and cause burns to the user.

### Summary of the invention

A main object of this invention is to obviate the above drawbacks, by providing a "moka" coffee making pot of simple construction, that can prepare coffee within a predetermined narrow temperature range, while forming a creamy layer, or two-componend beverages such as cappuccino, milk and coffee, latte macchiato.

Another object of the invention is to provide a coffee-maker in which valve operation is not affected by friction.

Yet another object of the invention is to provide a coffee-maker in which any suckback is prevented although the valve body does not communicate with the outside environment.

A particular object is to provide a coffee-maker that is easy to clean.

A further object of the invention is to provide a coffee-maker that is fail safe against hot liquid and steam spills during ordinary opening operations.

These and other objects, as better explained hereafter, are fulfilled by a coffee-maker structure as defined in claim 1, which comprises boiler for containing a liquid, a container for beverage, a fluid connection line between said boiler and said container which passes through a compartment for brewing a solid material, valve means placed in said connection line and having a closing member faced to a passage opening of said line, **characterized in that** said closing member is freely displaceable between a closed position in which it closes said passage, and an open position in which it opens said passage, elastic return means being provided which act on said closing member to normally urge it into said closing position.

### Brief description of the drawings

Further features and advantages of the invention will be more apparent from the detailed description of one preferred but non-exclusive embodiment of a coffee-maker according to the invention, which is described as a non-limiting example with the help of the annexed drawings, in which:
FIG. 1 is a side sectional view of a coffee-maker structure of the invention;
FIG. 2 is a perspective sectional view of the upper cup of the coffee-maker of FIG. 1, with the valve means out of seat;
FIG. 3 is a perspective sectional view of the upper cup of the coffee-maker of FIG. 1, with the valve means in seat and the coupling means in the rest position;
FIG. 4 is a side sectional view of the upper cup of the coffee-maker of FIG. 1, with the valve means in seat, in which the coupling means in the operating position and the closing member is in the closed position;
FIG. 5 is a side sectional view of the upper cup of the coffee-maker of FIG. 1, with the valve means in seat, in which the coupling means in the operating position and the closing member is in the open position;
FIG. 6 is a top view of a gasket to be interposed between the filter element of the cup and the containing compartment;
FIG. 7 is a cross sectional front view of a detail of the gasket of FIG. 6;
FIG. 8 is a side sectional view of a particular embodiment of the compartment for the solid material.

### Detailed description of a preferred embodiment

Referring to the above figures, these show a "moka" coffee making pot for preparing infusions, e.g. coffee or cappuccino, operating at predetermined pressure and temperature, which is generally designated by numeral 1.

The coffee maker structure substantially comprises a lower boiler 2 for containing brew water W; an infusion container 3, generally having a cup shape, which is situated above the boiler 2, and a brewing compartment 4 for containing the solid material to be brewed, such as ground coffee C, between the boiler 2 and the cup-shaped container 3.

In a preferred non exclusive embodiment of the invention, the boiler 2 and the container 3 are placed one above the other in mutual connection using a nut and screw assembly to form a single elongate member defining axis X.

For the ground coffee to be held within the compartment 4 during brewing, a filter element 5 is placed above it, i.e. fixed to the underside of the bottom wall 6 of the cup 3.

As is known, a gasket rink 34 may be interposed between the cup-shaped container 3 and the top edge of the boiler 2, for improved tightness between the cup-shaped container 3 and the boiler 2, thereby preventing leakages and pressure losses.

Preferably, the gasket 34 will be placed in direct contact under the peripheral edge of the filter element 5 and may be of a commonly available type.

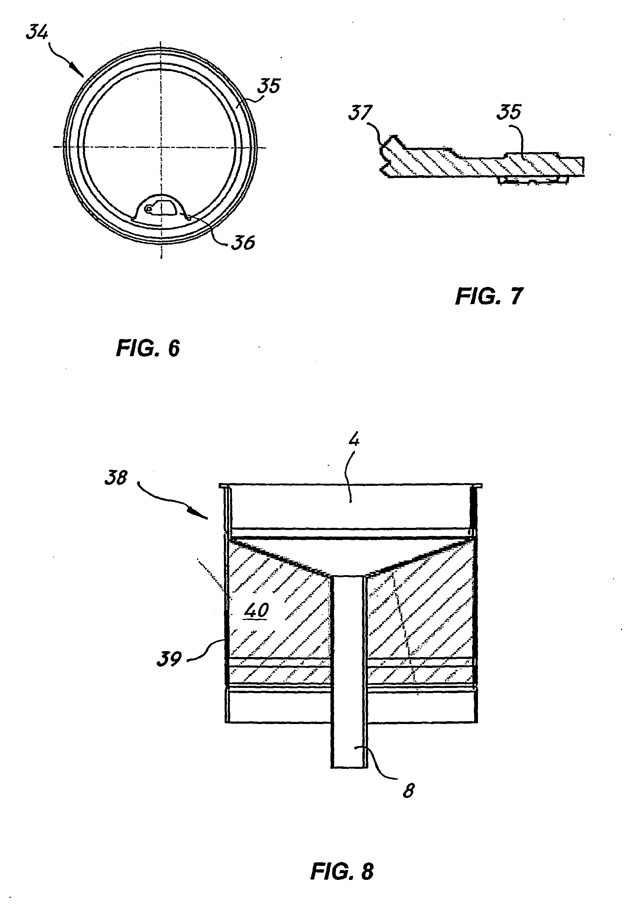

In an alternative embodiment, as shown in Figure 6, the gasket 34 may be a ring-like member 35 of soft, preferably silicone material, which has a radially inwardly projecting tab 36 for easy removal of the gasket 34 for maintenance or replacement purposes. The gasket may also have markings thereon to indicate the proper mounting direction.

Furthermore, as more clearly shown in Figure 7, the gasket 34 may have a double-step formation 37 on the outer periphery of the main body, for engagement with the threads of the boiler 2 to ensure tightness even when the edge of the boiler 2 is worn and further allow less tightening torque application as compared with prior art coffee-makers with gaskets.

The coffee-maker structure 1 further comprises a fluid connection line 7 between the boiler 2 and the cup-shaped container 3, which passes through the brewing compartment 4 and is indicated in the drawings by a dashed line L, substantially representing the flow of water W from the boiler 2 to the container 3.

Thus, under the heat Q delivered to the boiler 2, e.g. by an underlying open flame, the brew water W will flow up through the conduit 8 to the compartment 4, thereby causing the solid material C to be brewed. Then, the brew (which may include the brew water W, possibly as steam, and the compounds extracted from the solid material C) will pass through the passage 9 and through the ejector nozzle 10 to flow into the container 3. The ejector nozzle 10 is suitably calibrated for the hot infusion to be introduced in the container 3 at high speed.

The passage 9 may have a restriction for a pressure loss to be introduced along the line 7 thereby causing the brewing pressure and temperature in the compartment 4 that forms the brewing chamber 4 to increase to a predetermined value, as controlled by parameters that will be mentioned below.

Thus, if coffee grounds have been introduced in the compartment 4 and milk has been poured in the container 3, the jet through the nozzle 10 forms a surface layer of foam, typically present in the hot beverage known as cappuccino.

If nothing has been placed in the compartment but milk has been poured into the container 3, water heating in the boiler 2 will generate a steam jet for heating and forming a foam layer in such milk.

If coffee 4 has been placed in the compartment and nothing has been placed in the container 3, water heating in the boiler 2 will provide a creamy infusion like that obtained with Espresso machines.

Other similar beverages may be also prepared.

The coffee-maker structure 1 further has valve means 11 placed in the connection line 7 and having a closing member 12 facing towards the passage opening 9.

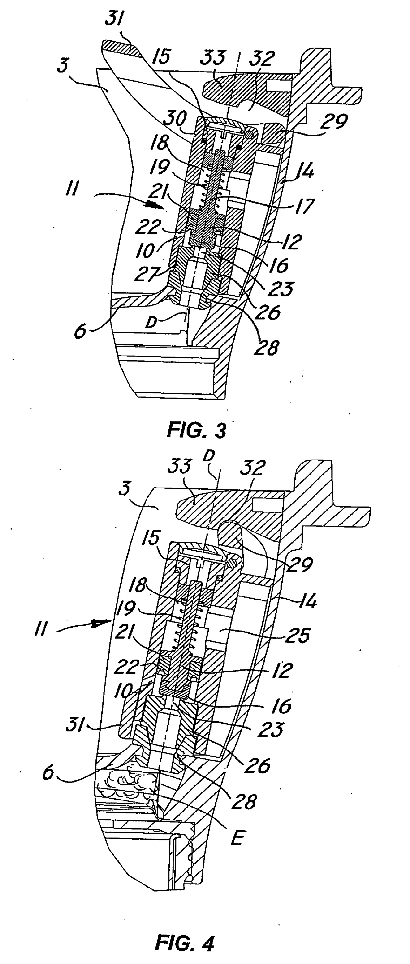

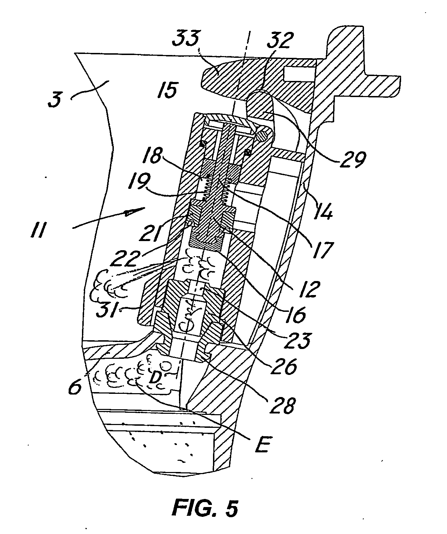

According to the invention, the closing member is freely displaceable between a closed position, as shown in Figure 4, and a opened position, as shown in figure 5. The valve means 11 further have elastic return means 13, which are operable to normally urge the closing member 12 into the closed position.

Thanks to the above configuration, the coffee-maker structure 1 of the invention affords increased safety and versatility as compared with prior art devices.

Free displacement of the closing member in its operating path, as well as the use of elastic means to normally urge it into the closing position eliminates the problem of the closing member becoming stuck and ensures the highest safety of use of the coffee-maker 1. Thus, the closing member cannot be stuck in any position during its travel, wherefore it can safely move back to its closing position.

Furthermore, the elastic means force the closing member 12 against the passage 9, thereby ensuring an effective tightening effect and the highest safety for users. Thus, even when pressure decreases in the boiler 2 due to cooling, the beverage in the container 3, if any, cannot be sucked back into the valve body.

Free displacement of the closing member in its operating path, as well as the use of elastic means to normally urge it into the closing position will always ensure equilibrium between the forces that tend to urge the closing member into the closed position and the forces that tend to move it into the opening position.

This allows the pressure and temperature at which the solid material is brewed to be changed almost instant by instant, thereby enhancing the aromatic blend of the material, and providing an excellent final beverage.

Furthermore, proper adjustment of the size and/or configuration of the elastic means 13 will provide a more or less aromatic beverage, according to user preferences and taste.

Also, the coffee-maker structure 1 of the invention has a simple and practical construction, with a minimized number of parts.

The lack of gravity-driven movements will also obviate any drawbacks deriving from imperfectly vertical positioning of the structure 1, and from vibrations and shocks that might cause uncontrolled opening with potential dangers for the user.

Suitably, the elastic return means 13 may be susceptible of operating in a direction d substantially inclined to the axis D. This arrangement allows the valve means 11 to be located proximate the wall 14 of the cup-shaped container 3, which adds advantages in terms of aesthetic attractiveness and cleaning of the coffee-maker structure 1. Indeed, such construction greatly simplifies cleaning of the container 3, thanks to the lack of obstacles in its central part, which is usually more difficult to clean.

Advantageously, the elastic return means 13 may include adjustment means, herein shown as an adjustment screw 15, for varying their elastic force according to the desired brewing pressure and/or temperature. This, the aromatic blend of the beverage may be varied without having to change the elastic means 13.

As a non-limiting example of the invention, the desired brewing pressure may be in a range from 1 bar to 2.4 bar. Tests have shown that optimal coffee brewing temperatures correspond to these pressure conditions.

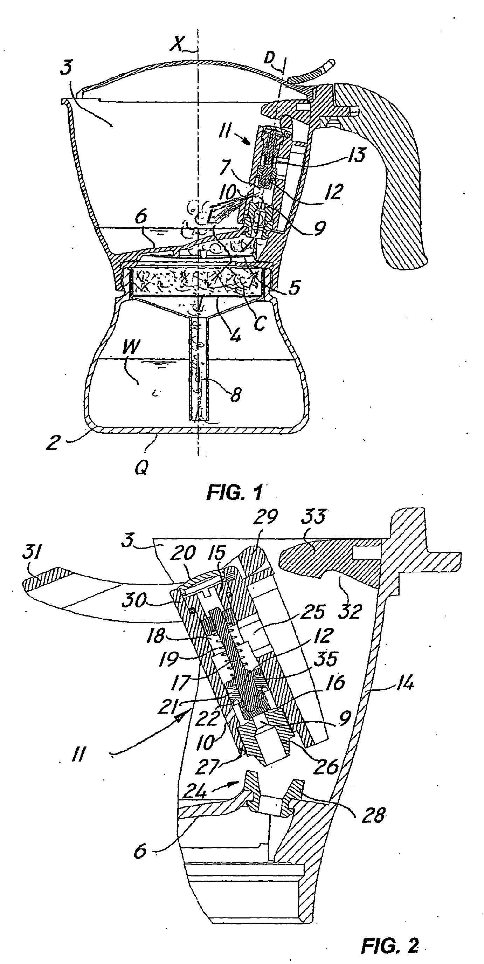

In terms of construction, as particularly shown in Figures 2 to 5, the closing member 12 may have a sealing head 16, herein shown as an elastomeric seal, formed of one piece with a stem 17 received in a substantially cylindrical chamber 18, whereas the elastic means 13 may include a helical spring 19 extending around the stem 17 and operable on the head 16. The substantially cylindrical chamber 18 further comprises the ejector nozzle 10.

A plug 20 may be further provided for protecting the adjustment screw 15. Therefore, brewing pressure adjustment will require the steps of removing the plug 20, driving the head of the screw 15 with a screwdriver to adjust compression on the spring 19 and reinserting the plug 20.

Operation on the adjustment screw 15 and/or proper sizing of the spring 10 will change the opening pressure for the closing member 12, and thence the solid material brewing pressure (and/or temperature), wherefore the aromatic blend of the beverage may be changed as desired.

The closing member 12 may further have an O-ring 21 with the face 22 towards the passage 9 being concavely shaped to provide a more effective sealing effect when the chamber 18 contains the brew under pressure. Due to the pressure in the chamber 18, the outer wall 35 of the ring 21 is urged towards the side wall of the chamber thereby improving tightness. As pressure decreases in the chamber 18, the outer wall 35 elastically returns to its original position thereby reducing friction with the side wall and facilitating the sliding movement of the closing member 12 driven by the spring 19.

The passage 9 is defined by an outlet section s of an opening 23 substantially coaxial with the chamber 18.

Conveniently, the ratio p of the area of the outlet section s to the area of the cross section S of the chamber 18 is predetermined to reach a sufficient working pressure to move the closing member 12 to the passage 9 opening position and to allow full outflow of the brew prior to urging of the closing member 12 back into its closing position.

Advantageously, the ratio p = s/S may be in a range from 5 to 20, and is preferably about 10.

Please note that s and S in the figures are intended to designate the diameters of the opening 23 and the chamber 18, which are shown to have a substantially cylindrical shape. It shall be understood that any shape and size may be used, as long as the propassageions of the sections, without departure from the inventive scope as defined in the annexed claims.

It shall be further understood that, as used herein, "working pressure" shall be intended as the pressure exerted by the brew on the underside of the head 16 of the closing member 12 and/or its gasket 22.

In a preferred non-limiting embodiment of the invention, the valve means 11 may include means 24 for removable coupling to the connection line 7. By these means, they can be removed from their seat, for easier cleaning thereof and of the coffee-maker structure 1. A slot 25 is specially provided for washing.

Advantageously, the removable coupling means 24 may include a bayonet or nut screw type mount located at the first end passageion 27 of the chamber 18 that is designed to cooperate with the bottom wall 6 of the container 3. A coupling gasket 28 may be provided on the latter for easier mounting and improved tightness.

The removable coupling means 24 may further comprise a safety cam 29 at the second opposite end passageion 30. The cam 29 is operable by a lever 31 and is susceptible of interacting with a respective groove 32 formed in an opposing member 33 attached to the side wall 14 of the container 3.

Advantageously, the valve means 11 may be partly or wholly formed of a synthetic (plastic) material or a metal material. Furthermore, thanks to the removable coupling means 24, they may be formed as spare parts or accessories of the coffee-maker structure 1. For example, the latter may be fitted with a plurality of valve means 11, each calibrated with a different elastic force exerted by the spring 19 for preparing beverages having different organoleptic properties using the same coffee-maker structure 1.

Figures 2 to 4 show the various steps for fixation of the valve means 11 to the container 3. Once the user has attached the valve means 11 to the bottom wall 6, he or she fixes them to the upper container 3 by the action of the lever 31 in the direction of arrow F₁. thereby engaging the cam 29 in the groove 32 of the body 33. The action of the cam 29 causes a slight downward translation of the valve means 11 in the direction of arrow F₂, for improved coupling of the mount 26 and the gasket 28.

Figures 4 and 5 show the opening and closing positions of the valve means 11. As mentioned above, by the action of heat Q, the brew E will exert an increasing pressure on the closing member 12 until, upon reaching of a given opening pressure value Pₒ, the closing member 12 will translate upwards, along the direction d. At the same time, the brew E will flow through the passage 9 to fill the chamber 18 and come out of the nozzle 10. The brew E flowing through the passage 9 will further exert a working pressure P_{W} on the head 16 of the closing member 12 and/or the underside of the O-ring 29, thereby holding the closing member 12 in an open position, while loading the spring 19. As the latter is loaded, it will exert a back pressure P_{S} on the closing member 12, in a direction substantially parallel to the direction d, but opposite to the working pressure P_{W}. It will be understood that the outflow will continue until the working pressure P_{W} is higher than the pressure P_{S} exerted by the spring.

As the brew E flows out, the working pressure P_{W} will inevitably decrease, as a result of system cooling. When the pressure P_{S} exerted by the spring becomes higher than the working pressure P_{W}, the spring 19 will urge the closing member back into its normal closing position.

Finally, Figure 8 shows a possible alternative configuration for the element defined by the compartment and the conduit 9, commonly known as "funnel", which is generally designated by numeral 38. In the illustrated arrangement, the funnel 38 may have a tubular wall axially extending downwards from the compartment 4, around the periphery of the conduit 8, to define therewith a chamber for dosing liquid to be introduced in the boiler 2.

The funnel 38 so configured will provide, as a single element, a multipurpose dosing unit, adapted to dose both water or any other liquid designed to be introduced in the boiler 2 and the solid material to be brewed, without requiring any external dosing unit, which would impose further space requirements onto the user, while always ensuring proper ratios of water, solid material and air in the boiler, according to the beverage to be prepared.

It will be further understood that a dosing funnel 38 so formed, as well as the gasket 34 of Figure 6 may be used with any other coffee-maker structure, even different from that of the present invention, such as a moka pot or any other traditional coffee-maker.

The coffee-maker structure of this invention is susceptible of a number of changes and variants, within the inventive concept disclosed in the appended claims.

While the coffee-maker structure has been described with particular reference to the accompanying figures, the numerals referred to in the disclosure and claims are only used for the sake of a better intelligibility of the invention and shall not be intended to limit the claimed scope in any manner.

## Claims

1. A coffee-maker structure for preparing a hot beverage, comprising a boiler (2) for containing a liquid (W), a container (3) for collecting the beverage, a fluid connection line (7) between said boiler (2) and said container (3) which passes through a compartment (4) for brewing a solid material (C), valve means (11) placed in said connection line (7), and having a closing member (12) faced to a passage opening (9) of said line (7), wherein said closing member (12) is freely displaceable between a closed position in which it closes said passage (9) and an open position in which it opens said passage (9), elastic return means (13) being provided which act on said closing member (12) to normally urge it into said closed position of said passage (9), **characterized in that** said elastic return means (13) include adjustment means (15) for varying the elastic return force according to the desired brewing pressure and/or temperature, thereby changing the aromatic blend of the beverage.

2. Coffee-maker structure as claimed in claim 1, **characterized in that** said boiler (2) and said container (3) are designed to be coupled together to form a single body which defines a longitudinal axis (X), said elastic return means (13) being susceptible of operating in a direction (d) substantially inclined to said longitudinal axis (X).

3. Coffee-maker structure as claimed in claim 1, **characterized in** said desired brewing pressure is in a range from 1 bar to 2,4 bar.

4. Coffee-maker structure as claimed in one or more of claims 1 to 3, **characterized in that** said closing member (12) has a sealing head (16) formed of one piece with a stem (17) received in a substantially cylindrical chamber (18).

5. Coffee-maker structure as claimed in claim 4, **characterized in that** said elastic means (13) include a helical spring (19) extending around said stem (17) and operable on said head (16).

6. Coffee-maker structure as claimed in claim 5, **characterized in that** said means for adjustment (15) of said elastic means (13) include a screw for adjusting said spring (19).

7. Coffee-maker structure as claimed in claim 6, **characterized in that** said closing member (12) has an O-ring (21) with the face (22) towards said passage (9) being substantially concavely shaped to provide a more effective sealing effect when said chamber (18) contains a fluid under pressure.

8. Coffee-maker structure as claimed in claim 4,
**characterized in that** said passage (9) is defined by the outlet section (s) of an opening (23) substantially coaxial with said chamber (18).

9. Coffee-maker structure as claimed in claim 8, **characterized in that** the ratio (p) of the area of the outlet section (s) to the area of the cross section (S) of said chamber (18) is predetermined to reach such a working pressure (P_{W}) as to move said closing member (12) to the passage (9) opening position and to allow full outflow of the brew (E) before allowing the closing member (12) to come back into said passage (9) closing position.

10. Coffee-maker structure as claimed in claim 9, **characterized in that** said predetermined area ratio (p) is in a range from 5 to 20 and preferably about 10.

11. Coffee-maker structure as claimed in one or more of claims 4 to 10, **characterized in that** said substantially cylindrical chamber (19) has an ejector nozzle (10) for ejecting the beverage into said container (3).

12. Coffee-maker structure as claimed in one or more of claims 1 to 11, **characterized in that** said valve means (11) include means (24) for removable coupling to said connection line (7).

13. Coffee-maker structure as claimed in claim 12, **characterized in that** said removable coupling means (24) include a mount element (26) located at a first end passage (27) of said chamber (18) that is designed to cooperate with said bottom wall (6) of said container (3).

14. Coffee-maker structure as claimed in claim 13, **characterized in that** said removable coupling means (24) include a safety cam (29) located at a second end passage (30) opposite to said first passage (27), said cam (29) being operable by a lever (31) and susceptible of interacting with a respective groove (32) formed in an opposing member (33) attached to the side wall (14) of said container (3).

15. Coffee-maker structure as claimed in claim 1, **characterized in that** said valve means (11) are located proximate to the side wall (14) of the cup-shaped container (3).

## Patentansprüche

1. Kaffeemaschinenstruktur zur Zubereitung eines Heißgetränks mit einem Kocher (2) zur Aufnahme einer Flüssigkeit (W), einem Behälter (3) zum sammeln des Getränks, einer Flüssigkeitsverbindungsleitung (7) zwischen dem Kocher (2) und dem Behälter (3), die durch einen Bereich (4) zum Brühen eines festen Stoffes (C) verläuft, Ventileinrichtungen (11), die in der Verbindungsleitung (7) angeordnet sind und ein Verschlusselement (12) aufweisen gegenüber einer Durchlassöffnung (9) dieser Leitung (7), wobei das Verschlusselement (12) frei verschiebbar ist zwischen einer geschlossenen Stellung, in der es diesen Durchlass (9) verschließt und einer geöffneten Stellung, in der es diesen Durchlass (9) öffnet, wobei elastische Rückholeinrichtungen (13) vorgesehen sind, die auf das Verschlusselement (12) wirken, um es normalerweise in die geschlossenen Stellung, dieses Durchlasses (9) drängt, **dadurch gekennzeichnet, dass** diese elastischen Rückholeinrichtungen (13) Einstelleinrichtungen (15) aufweisen, die die elastische Rückholkraft variieren entsprechend des gewünschten Brühdrucks und/oder Temperatur, so dass die aromatische Mischung des Getränks geändert ist.

2. Kaffeemaschinenstruktur gemäß Anspruch 1, **dadurch gekennzeichnet, dass** der Kocher (2) und der Behälter (3) so ausgebildet sind, dass sie zusammen gekoppelt werden können zu einem einzigen Gehäuse, der eine longitudinale Achse (X) bildet, wobei die elastischen Rückholeinrichtungen (13) geeignet sind in eine Richtung (d) zu wirken, die im wesentlichen geneigt ist zu der longitudinalen Achse (X).

3. Kaffeemaschinenstruktur gemäß Anspruch 1, **dadurch gekennzeichnet, dass** der gewünschte Brühdruck in einem Bereich von 1 bar bis 2,4 bar ist.

4. Kaffeemaschinenstruktur gemäß einem oder mehrerer der Ansprüche 1 bis 3, **dadurch gekennzeichnet, dass** das Verschlusselement (12) einen Dichtkopf (16) hat, der aus einem Stück mit einem Stamm (17 gebildet ist, der in einer im wesentlichen zylindrischen Kammer (18) aufgenommen ist

5. Kaffeemaschinenstruktur gemäß Anspruch 4, **dadurch gekennzeichnet, dass** die elastischen Einrichtungen (13) eine Spiralfeder (19) umfassen, die sich um dem Stamm (17) erstreckt und auf den Kopf (16) wirksam ist.

6. Kaffeemaschinenstruktur gemäß Anspruch 5, **dadurch gekennzeichnet, dass** die Einrichtungen zum Einstellen (15) der elastischen Einrichtungen (13) eine Schraube umfassen zum Einstellen der Feder (19).

7. Kaffeemaschinenstruktur gemäß Anspruch 6, **dadurch gekennzeichnet, dass** Verschlusselement (12) einen O-Ring (21) aufweist dessen Frontseite (22) zu dem Durchlass (9) gerichtet ist, der im wesentlichen konkav ausgebildet ist um einen wirksameren Dichtungseffekt zu erreichen, wenn die Kammer (18) eine Flüssigkeit unter Druck enthält.

8. Kaffeemaschinenstruktur gemäß Anspruch 4, **dadurch gekennzeichnet, dass** der Durchlass (9) durch den Auslassbereich (s) einer Öffnung (23) definiert ist, die im wesentlichen koaxial ist zu der Kammer (18).

9. Kaffeemaschinenstruktur gemäß Anspruch 8, **dadurch gekennzeichnet, dass** das Verhältnis (p) der Fläche des Auslassbereichs (s) zu der Fläche des Querschnitts (S) der Kammer (18) vorbestimmt ist, um einen solchen Arbeitsdruck (Pw) zu erreichen, dass das Verschlusselement (12) in die Öffnungsstellung für den Durchlass (9) bewegt wird und voller Ausfluss des Gebräus (E) zugelassen wird bevor das Verschlusselement (12) zurückkommen darf in die geschlossene Stellung für den Durchlass (9).

10. Kaffeemaschinenstruktur gemäß Anspruch 9, **dadurch gekennzeichnet, dass** das vorbestimmte Verhältnis (p) in einem Bereich von 5 bis 20 und vorzugsweise um 10 ist.

11. Kaffeemaschinenstruktur gemäß einem oder mehreren der Ansprüche 4 bis 10, **dadurch gekennzeichnet, dass** die im wesentlichen zylindrische Kammer (19) eine Ausgabedüse (10) aufweist zum Ausgeben des Getränks in den Behälter (3).

12. Kaffeemaschinenstruktur gemäß einem oder mehreren der Ansprüche 1 bis 11, **dadurch gekennzeichnet, dass** die Ventileinrichtungen (11) Einrichtungen (24) aufweisen zum lösbaren Kuppeln mit der Verbindungsleitung (7).

13. Kaffeemaschinenstruktur gemäß Anspruch 12, **dadurch gekennzeichnet, dass** die lösbaren Kuppeleinrichtungen (24) ein Montageelement (26) aufweisen, das an einem Durchlass (27) an einem ersten Ende der Kammer (18) angeordnet ist und so ausgelegt ist, dass es mit der Bodenwand (6) des Behälters (3) zusammen wirkt.

14. Kaffeemaschinenstruktur gemäß Anspruch 13, **dadurch gekennzeichnet, dass** die lösbaren Kuppeleinrichtungen (24) einen Sicherheitsnocken (29) aufweisen, der an einem Durchlass (30) an einem zweiten Ende gegenüber dem ersten Durchlass (27) angeordnet ist, wobei der Nocken (29) über einen Hebel (31) betätigt wird und so ausgelegt ist, dass er mit einer jeweiligen Nut (32) zusammen wirkt, die in einem entgegen gesetzten Element (33) gebildet ist, das an der Seitenwand (14) des Behälters (3) angebracht ist.

15. Kaffeemaschinenstruktur gemäß Anspruch 1, **dadurch gekennzeichnet, dass** die Ventileinrichtungen (11) nahe der Seitenwand (14) des tassenförmigen Behälters (3) angeordnet sind.

## Revendications

1. Structure de cafetière destinée à préparer une boisson chaude, comprenant une bouilloire (2) servant à contenir un liquide (W), un récipient (3) destiné à recueillir la boisson, un conduit de liaison fluidique (7) entre ladite bouilloire (2) et ledit récipient (3), qui passe à travers un compartiment (4) destiné à infuser une matière solide (C), des moyens formant soupape (11) placés dans ledit conduit de liaison (7) et ayant un élément de fermeture (12) qui fait face à une ouverture de passage (9) dudit conduit (7), dans lequel ledit élément de fermeture (12) peut se déplacer librement entre une position fermée, dans laquelle il ferme ledit passage (9), et une position ouverte dans laquelle il ouvre ledit passage (9), cependant qu'il est prévu des moyens de rappel élastiques (13) qui agissent sur ledit élément de fermeture (12) pour tendre normalement à le placer dans ladite position fermée dudit passage (9), **caractérisée en ce que** lesdits moyens de rappel élastiques (13) comprennent des moyens de réglage (15) permettant de faire varier la force élastique en fonction de la pression et/ou la température désirée de l'infusion, en modifiant par ce moyen la composition aromatique de la boisson.

2. Structure de cafetière selon la revendication 1, **caractérisée en ce que** ladite bouilloire (2) et ledit récipient (3) sont conçus pour être accouplés l'un à l'autre pour former un seul corps qui définit un axe longitudinal (X), lesdits moyens de rappel élastiques (13) pouvant travailler dans une direction (d) sensiblement inclinée par rapport audit axe longitudinal (X).

3. Structure de cafetière selon la revendication 1, **caractérisée en ce que** ladite pression d'infusion désirée est dans l'intervalle allant de 1 bar à 2,4 bar.

4. Structure de cafetière selon une ou plusieurs des revendications 1 à 3, **caractérisée en ce que** ledit élément de fermeture (12) présente une tête d'étanchéité (16) formée d'une seule pièce avec une tige (17) logée dans une chambre sensiblement cylindrique (18).

5. Structure de cafetière selon la revendication 4, **caractérisée en ce que** lesdits moyens élastiques (13) comprennent un ressort hélicoïdal (19) qui s'étend autour de ladite tige (17) et qui peut agir sur ladite tête (16).

6. Structure de cafetière selon la revendication 5, **caractérisée en ce que** lesdits moyens (15) permettant le réglage desdits moyens élastiques (13) comprennent une vis servant à régler ledit ressort (19).

7. Structure de cafetière selon la revendication 6, **caractérisée en ce que** ledit élément de fermeture (12) possède une bague torique (21) dont la face (22) dirigée vers ledit passage (9) est de forme sensiblement concave pour donner un effet d'étanchéité plus efficace lorsque ladite chambre (18) contient un fluide sous pression.

8. Structure de cafetière selon la revendication 4, **caractérisée en ce que** ledit passage (9) est défini par la section de sortie (s) d'une ouverture (23) sensiblement coaxiale à ladite chambre (18).

9. Structure de cafetière selon la revendication 8, **caractérisée en ce que** le rapport (p) entre la surface de la section de sortie (s) et la surface de la section transversale (S) de ladite chambre (18) est prédéterminé pour atteindre une pression de travail (P_{w}) capable de placer ledit élément de fermeture (12) dans la position d'ouverture du passage (9) et de permettre l'écoulement complet de l'infusion (E) avant de permettre à l'élément de fermeture (12) de revenir à ladite position de fermeture du passage (9).

10. Structure de cafetière selon la revendication 9, **caractérisée en ce que** ledit rapport de surface prédéterminé (p) est dans un intervalle allant de 5 à 20 et est de préférence égal à environ 10.

11. Structure de cafetière selon une ou plusieurs des revendications 4 à 10, **caractérisée en ce que** ladite chambre sensiblement cylindrique (19) possède une buse formant éjecteur (10) destiné à éjecter la boisson dans ledit récipient (3).

12. Structure de cafetière selon une ou plusieurs des revendications 1 à 11, **caractérisée en ce que** lesdits moyens formant soupape (11) comprennent des moyens de raccordement démontables (24) pour les raccorder audit conduit de liaison (7).

13. Structure de cafetière selon la revendication 12, **caractérisée en ce que** lesdits moyens de raccordement démontables (24) comprennent un élément de monture (26) situé à un premier passage extrême (27) de ladite chambre (18) et qui est conçu pour coopérer avec ladite paroi de fond (6) dudit récipient (3).

14. Structure de cafetière selon la revendication 13, **caractérisée en ce que** lesdits moyens de raccordement démontables (24) comprennent une came de sécurité (29) placée à un deuxième passage extrême (30) situé à l'opposé du premier passage (27), ladite came (29) pouvant être actionnée par un levier (31) et pouvant coopérer avec une gorge respective (32) formée dans un élément opposé (33) attaché à ladite paroi latérale (14) dudit récipient (3).

15. Structure de cafetière selon la revendication 1, **caractérisée en ce que** lesdits moyens formant soupape (11) sont situés à proximité de la paroi latérale (14) du récipient en forme de bol (3).
